# EUROPEAN PATENT SPECIFICATION

(11) **EP 4 273 619 B1**
(45) Date of publication and mention of the grant of the patent: **24.06.2026**
(21) Application number: 22382430.1
(22) Date of filing: 04.05.2022
(51) Int. Cl.: G02C 7/04, A61F 9/013

(54) **ORTHOKERATOLOGY CONTACT LENS**
ORTHOKERATOLOGISCHE KONTAKTLINSE
LENTILLE DE CONTACT ORTHOKÉRATOLOGIQUE

(43) Date of publication of application: 08.11.2023
(73) Proprietor: Pauné Fabré, Jaime, 08980 Sant Feliu del Llobregat (ES)
(72) Inventor: Pauné Fabré, Jaime, 08980 Sant Feliu del Llobregat (ES)
(74) Representative: Ponti & Partners, S.L.P

(56) References cited:
- EP-A1- 3 045 156
- WO-A1-2022/096758
- WO-A1-97/24639
- WO-A2-2009/149116
- CN-Y- 2 890 976
- JP-A- 2008 112 121
- US-A1- 2004 257 524

## Description

### Field of the invention

The present invention relates to a contact lens particularly suitable for orthokeratology, designed to induce controlled epithelial hypoplasia and/or hyperplasia in the necessary areas of a patient's cornea, thereby modifying the optics of corneal surface to correct the refractive error of the patient and enhancing myopia control effect.

### Background of the invention

Contact lenses known as orthokeratological or Reverse Geometry lenses are intended to reshape the first layer of the cornea, known as the epithelium, in order to correct refractive defects of the eye while the patient sleeps. Current lens designs are worn during sleeping hours, so the central zone compresses a central portion of the cornea, making the user's epithelium conform to the shape of the lens. The refractive change caused by changing the curvature of the front corneal surface enhances myopia control effect.

The original design idea of the Orthokeratology is to use a hard contact lens with a central back curve with a larger radius than the radius of curvature of the centre of the cornea to apply pressure to the cornea to cause temporary deformation of the corneal epithelium. The radius of curvature of the central region increases, thereby moving the focusing of images of distant objects to the retina. Original Ortho-K made a very limited change in corneal centre curvature. Myopia patients needed to wear a lens with a gradually incremental larger curvature, which can take several months to several years to achieve corrective vision and the amount of correction was very low.

Stoyan (US 4,952,045) first introduced the concept of a three-section curve corneal lens with a base curve (Central back Curve) zone, a tear reservoir (induced by a reverse curve) zone and a peripheral curve zone. According to this idea, the radius of curvature of the Base Curve of central region is larger than the radius of curvature of the corneal centre of the myopic patient, and then the reverse curve is a circular curve having a radius of curvature smaller than the radius of curvature of the corresponding corneal region. Reverse curve and the underlying corneal anterior surface form a space known as the tear reservoir where tears accumulate and accommodate thickening of the mid-peripheral corneal epithelial cell layer. The peripheral curve area is connected to the reverse curve, which is in contact with the peripheral front surface of the cornea and is lifted outward. The peripheral curve in the three-segment curve design forms a line contact with the anterior surface of the cornea. A major drawback of this design is that the lens is easy to move, and the central positioning is not good. To enhance the central positioning of the Ortho-K contact lenses, Reim (US 5,963,297) proposed a four-segment curve design, namely the base curve (Base Curve Zone), the reverse curve zone, the alignment curve zone and the surrounding curve zone. The reverse curve region is connected to connected to a circular curve segment in close contact with the epithelial cell layer of the cornea. The contact of this circular segment with its corneal epithelial cell layer becomes a surface contact starting from the line of contact in the three-segment curve design, thereby enhancing the central positioning function of the Ortho-K Contact Lenses.

A lens for correcting myopia is defined by a central curve, also known as the optical zone, with a diameter falling between 6.00 to 6.20 mm, with a greater curvature radius than the radius of the user's central apical corneal area. Around its central zone the lens comprises a first annular curve, also named as reverse curve, return curve, fitting curve or connection curve. This reverse curve has a typical width between 0.6 to 1.2 mm and at least its central portion has a smaller radius than the central curve, causing the reverse curve to remain separated from the cornea and inducing space between the eye and the lens at the point of intersection with the end of the central zone, so allowing for tear accumulation. This space or zone is also known as tear reservoir. Examples of this zone can be seen elsewhere and for example in documents US4952045A, EP3495873A1, ES1058102U, ES2406380A1 and WO2018234666A1. The lenses also include a series of annular curves located outside the reverse curve, between the end of this one and the edge of the lens, known in the literature as facilitate curves, alignment curves or peripheral zones. These curves align and rest on the periphery of the cornea, as disclosed in many documents as for example in WO2002041070A1 (Hsiao Ching, Tung.) where these curves provide an additional friction action against the steep mid-peripheral cornea after a short wearing period, which in turn facilitates better centering for the lens, other documents as JP2008112121 are similar as Notice of Reasons for Refusal in that case explain. Specifically, document JP2008112121 discloses an orthokeratological contact lens with a central base zone, a first reverse zone, an intermediate zone, a second reverse zone, one alignment zone and one edge peripheral zone. Only the central base zone is made to reshape the epithelium, being the first and second reverse zones made to create spaces, together with the base zone and the intermediate zone, respectively, to receive corneal cell tissue transferred from the base zone.

No one of these designs solve the problems for controlled modification of the mid-peripheral epithelium thickness, hence are limited in amount of refractive correction and size for optic zone treatment.

Regarding the reverse curve zone, the document US6543897B1(Hsiao Ching, Tung) describes it as the fitting zone and the facilitate zone. Together act as a transition region between the optical zone and the alignment zone. The fitting zone and the facilitate zone bring the posterior surface of the contact lens to a bearing relationship on the central portion of the cornea, and provides compression force on the optical zone, thereby compressing the central portion of the cornea, to mould the cornea. This kind of construction doesn't provide a controlled peripheral pressure and only helps in central zone not solving the problems addressed by this patent.

In documents as WO9724639 A1 (Grossinger) the peripheral zone includes a three-dimensional pattern placed on the posterior surface of the contact lens and the three-dimensional pattern includes portions not in contact with the surface of the eye. The smooth three-dimensional pattern formed into peripheral zone, is designed to lift portions of contact lens off the surface of the eye so as to create spaces between the lens and the surface of the eye for improved tear flow and exchange. Midperipheral zone does not provide any optical functionality or epithelial change. In patent CN103558695 A1 these alignment curves may follow an undulated pattern or waveform, sinusoidal, cosinusoidal or combinate in rounded smooth shape that includes sections not in contact with the cornea. But by their characteristics of repeated pattern and minimum size induces an increase of tear flow and a distribution of the pressure to avoid any corneal molding as it is the objective of current patent. Moreover, the position of these kind of patterns is placed at very peripheral areas and not having influence in vision or central cornea. Notwithstanding what is named in document CN103558695 A1 as modulation curve zone is designed to have a small change in the overall thickness of the corneal epithelial cell layer in the modulation zone and therefore have no impact on overall correction as described in present patent. Therefore, these designs don't help to solve any of the problems that current patent is able to do. Patents WO9724639 A1 and CN103558695 A1 doesn't provide any of the benefits of an improved refractive changes or any epithelial modification that may increase the refractive correction.

The primary object of the present invention is to overcome the drawbacks associated with prior art orthokeratology contact lenses and to provide an improved orthokeratology contact lens that allows controlled sufficient mid-peripheral epithelial change to increase locally an increase of mid peripheral epithelial thickness that coupled with central regular thinning gives a large optic zone of optical correction, giving better vision and avoid haloes and glare in patients wearing the new design.

Other documents as ES2406381 A1 show lenses to treat myopia with a central aspheric optic zone and may incorporate a reverse geometry and in an optional possible construction to add an undulate back surface in his far periphery to help centration that doesn't have any impact on epithelial modification, additionally they are placed in a much distant position of the centre of the lens. Thus, doesn't solve any of the problems taken in account in current patent.

The intersection between reverse curve and alignment curves are fixed for each design and typically lands on cornea between 3.70 to 4.00 mm from apex. Total diameter of orthokeratology lenses falls between 10.20 to 11.20 mm.

The objectives descripts on previous art for the Optical Zone was to create a central bearing area in a region centered at an apical centre of the cornea where a primary compressive force were applied during correction; and an Alignment Zone creating a large bearing area where a centering force was created to maintains the optical zone at the apical centre of the cornea, the alignment zone further producing a secondary compressive force in the large bearing area that cooperates with the primary compressive force to flatten the central portion of the cornea during vision correction as is depicted in US5963297A (Reim, T.).

The current knowledge over orthokeratology treatment is founded over the statement that is hydrodynamic forces that carry on the process. (Mountford, J. Chapter 10 - A model of forces acting in orthokeratology, Orthokeratology, Butterworth-Heinemann, 2004. Pages 269-301), but the author of the present invention surprisingly discovered that the way how corneal epithelium modify is from a totally different basis, explained as follows.

The corneal epithelium is composed of four to six layers of stratified, squamous, nonkeratinized epithelial cells, and has a thickness of about 50 µm in humans. The epithelium can change its thickness due to hyperplasia (growth of a greater number of cell layers) or hypoplasia (growth of a smaller number of cell layers).

Thus, a controlled pressure over mid peripheral epithelium increases the span and speed of treatment. This enhances the increase of midperipheral epithelial thickness when space is allowed in the two sides of the pressure zone. In this regard once the lateral pressure is increased by reduce the area of surface in contact with the mid-peripheral epithelium as induced by the present lens, the level of refractive correction is enhanced in a very significant manner. Described in previous literature is accepted that central epithelial thinning in orthokeratology is of -19 ± 3.5 µm microns, and mid peripheral thickening of +14 ± 3.0 µm. (Alharbi A, Swarbrick HA. The effects of overnight orthokeratology lens wear on corneal thickness. Invest Ophthalmol Vis Sci. 2003 Jun;44(6):2518-23.). Using the design described herein it is possible to reach 25 microns of change in midperipheral cornea that accounts for a 78% extra epithelial midperipheral change.

To understand the importance of this fact is necessary to know that the refractive power of a surface depends of his radius of curvature. Is known by the Munnerlyn's formula how much change in thickness is needed for a given refractive change (Munnerlyn, Charles R.; Koons, Stephen J.; Marshall, John (1988). "Photorefractive keratectomy: A technique for laser refractive surgery". Journal of Cataract and Refractive Surgery. 14 (1): 46-52.). The formula states that the depth of the central thinning (in micrometres) per dioptre of refractive change is equal to the square of the diameter of the optical zone measured in millimetres, divided by three. For example, to change refraction by 4 dioptres with an optical zone of 3 mm would require thinning of 12 µm. As the depth of thinning is proportional to the square of the optical zone, changing the refraction by 4 dioptres but with an optical zone of 6 mm would require a much deeper change of approximately 48 µm. That is not possible in orthokeratology since central thinning is limited to an average of 19 microns. Therefore, the only way to obtain a larger optical zone is to increase midperipheral thickening adding extra tissue around central flattening.

Hitherto, the contact zone and the alignment zone are designed to create a corneal support distributed over a large area, in order to keep the optical zone substantially centred on the visual axis of the cornea. However, although there are currently many designs for the inner face of this type of lenses, all correspond to the definition of the radius of the central zone and/or the tear accumulations, but not to the definition of the contact zone and the alignment zone to aid in epithelial reshaping.

Although lens design has evolved, drawbacks remain such as the time required to obtain results, the number of lenses needed, the amount of refraction that can be corrected, and the stability of the patient's eyesight. The structure of this type of lenses can be defined in an even more optimal manner to achieve improved results.

Another benefit of current design is adding a second pressure zone to create an intermediate incurved area that will change the light passing through peripheral corneal that influences eye growth and hence myopia control in children.

### Description of the invention

The present invention relates a contact lens highly effective for orthokeratology, defined according to claim 1, designed to induce through mid-peripheral controlled contact pressure zones a specific and focal midperipheral epithelial hyperplasia in a patient's cornea coupled with a central epithelial thinning, thereby modifying the optics of corneal surface to correct the refractive error of the patient and enhance myopia control effect.

Embodiments of the orthokeratological contact lens of the present invention are defined according to claims 2 to 6.

The present orthokeratological contact lens has an axially symmetric inner profile intended to be placed on the corneal surface of an eye and modify the thicknesses of its epithelium to correct refractive defects. Said inner profile comprises:
- a disc shaped central curve having a diameter between 4 to 7 mm and being designed to centrally correct the refractive defect of the eye when placed concentrically with respect to its pupil,
- at least one annular reverse curve having a radial width between 0.5 to 1.3 mm and being connected annularly to the central curve, at least a portion of the annular reverse curve having a smaller radius than the central curve.

The present lens is characterised in that comprises at least one annular outgoing curve tangentially connected to the at least one annular reverse curve at a circumferential connection line, so defining at least one circumferential reshaping area which comprise each portion of said annular reverse curve and said annular outgoing curve adjacent to the circumferential connection line, the at least one circumferential reshaping area being suitable for contacting the corneal surface and applying a determined annular pressure on the periphery of the cornea for reshaping the epithelium.

Because of the present lens' configuration, the circumferential reshaping area, which comprises the portions of said annular reverse curve and said annular outgoing curve adjacent to the reshaping line, applies a controlled and determined annular pressure on the periphery of the cornea, reshaping its epithelium by both restricting epithelial thickness increase in the reshaping area and letting it to increase in adjacent areas.

The portions of said annular reverse curve and said annular outgoing curve adjacent to the reshaping line comprise a radius of curvature between 1 mm and 3 mm. A range of radius between 0.1 mm and 5 mm applies an optimum annular pressure on the periphery of the cornea, reshaping its epithelium quicker than the known lens. In addition, this range of radius of curvature prevents the drawbacks of current lenses intended for this type of treatment, namely excessive focal compression of the contact area, due to edges in the intersection of the two adjacent curves, which could cause an uncomfortable abrasive feeling for the user or make the epithelium excessively thin, leading to an ineffective correction or even being dangerous to corneal integrity. The radius of curvature between 1 mm and 3 mm is the range that achieves high comfortable epithelial reshaping, thereby optimising the correction of the refractive defect.

In general, the radial section of the contact is defined by a single radius of curvature, although optionally it can be defined by more than one radius of curvature. In other words, each portion of said annular reverse curve and said annular outgoing curve adjacent to the reshaping line comprise a different radius of curvature. If there is more than one radius of curvature, these are also between 1 mm and 3 mm.

According to an embodiment of the lens, the radius of curvature of any of said portions of the annular reverse curve and the annular outgoing curve changes progressively according to a determined asphericity factor defined according to said determined annular pressure on the periphery of the cornea. A preferred progressive change of the radius of curvature of at least one portion has an asphericity factor between 0 and 2. It is preferably linked to a distance between the distal points of said portions between 0.05 and 0.5 mm. A more preferred progressive change of the radius of curvature of at least one portion has an asphericity factor between 0 and 1. It is preferably linked to a distance between the distal points of said portions between 0.05 and 0.2 mm. Another preferred progressive change of the radius of curvature of at least one portion has an asphericity factor between 0.0 and 1. It is preferably linked to a distance between the distal points of said portions falls between 0.2 and 0.5 mm.

In a preferred embodiment of the lens, a central portion of said annular reverse curve has an inclination angle α with respect to the tangent plane of the corneal surface between 5° and 85°.

In another preferred embodiment of the lens, a central portion of said annular outgoing curve has an inclination angle β with respect the tangent plane of the corneal surface between 10° and 60°. Optionally, this embodiment of the lens can comprise an additional contact area, more peripheral than said contact area and also configured to be in contact with the corneal surface. In other words, the lens comprises an additional annular reverse curve connected annularly to the annular outgoing curve and an additional annular outgoing curve connected annularly to the additional annular reverse curve and to the first alignment curve, so generating an additional annular reshaping line suitable for being in contact with the epithelium at a corneal apex distance between the corneal apex distance of the reshaping line and the corneal apex distance of the alignment line.

In other possible embodiment, the lens can comprise more than one additional contact area, radially connected with each other through corresponding connection and annular outgoing curves.

Preferably, the orthokeratological contact lens comprises at least one further annular reverse curve connected annularly to the annular outgoing curve and at least one further annular outgoing curve connected annularly to the at least one further annular reverse curve at a second circumferential connection line, so defining at least one further circumferential reshaping area comprising each portion of said at least one further annular reverse curve and said at least one further annular outgoing curve adjacent to the circumferential connection line, the at least one further circumferential reshaping area being suitable for contacting the corneal surface and applying a determined annular pressure on the periphery of the cornea for reshaping the epithelium.

The contact lens according to the invention overcomes the drawbacks of the prior art and provides a design that allows correcting the eyesight of a patient in a more comfortable, quicker, and more effective manner. Moreover, in addition to correcting greater refraction defects it allows establishing larger treatment areas to reduce undesired effects such as halos or glare. This lens helps as well in better myopia control in children.

### Brief description of the drawings

In order to better understand the description made, a set of drawings has been provided which, schematically and solely by way of non-limiting example, represent a practical case of embodiment.
Figure 1 is a schematic view of a symmetrical section of a first embodiment of the present contact lens.
Figure 2 is an enlarged view of the inset A of figure 1.
Figure 3 is a schematic view of a symmetrical section of an exemplary orthokeratological contact lens.
Figure 4 is an enlarged view of the inset A' of figure 3.

### Description of preferred embodiments

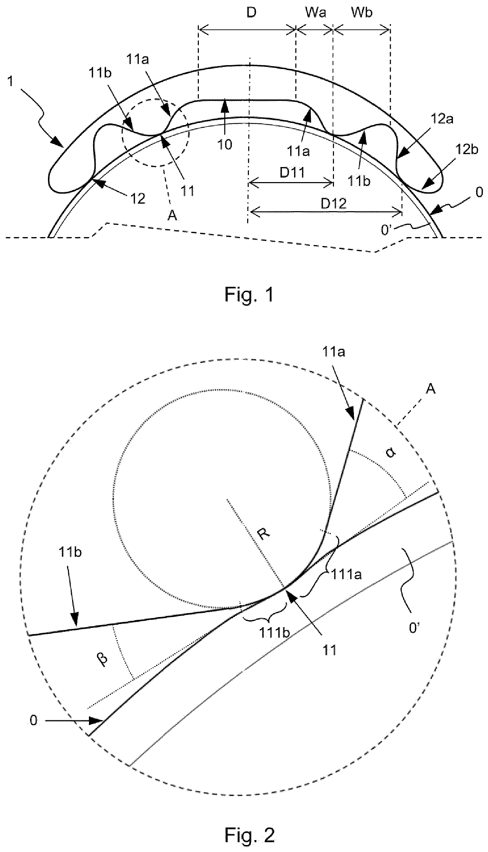

Some examples of embodiments of the present contact lens (1, 1') are described below with reference to lens embodiments sections of figures 1 to 4.

Figures 1 shows a first embodiment of the contact lens (1) having an axially symmetric inner profile intended to be placed on the corneal surface (0) of an eye and modify the thicknesses of its epithelium (0') to correct refractive defects, said inner profile comprising:
- a disc shaped central curve (10) having a diameter (D) between 4 to 7 mm and being designed to centrally correct the refractive defect of the eye when placed concentrically with respect to its pupil,
- an annular reverse curve (11a) having a radial width (Wa) between 0.5 to 1.3 mm and being connected annularly to the central curve (10), at least a portion of the annular reverse curve (11a) having a smaller radius than the central curve (10),
- an annular outgoing curve (11b) having a radial width (Wb) between 0.5 to 1 mm and being tangentially connected to the annular reverse curve (11a) at a circumferential connection line (11), so defining a circumferential reshaping area comprising each portion of said annular reverse curve (11a) and said annular outgoing curve (11b) adjacent to the circumferential connection line (11), the circumferential connection line (11) being in contact with the corneal surface (0) at a corneal apex distance (D11) between 3 to 4 mm and
- a second annular reverse curve (12a) connected annularly to the annular outgoing curve (11b) and
- a second annular outgoing curve (12b) connected annularly to the first annular reverse curve (12a) at a second circumferential connection line (12), so defining at least one further circumferential reshaping area comprising each portion of said at least one further annular reverse curve (12a) and said at least one further annular outgoing curve (12b) adjacent to the circumferential connection line (12), the at least one further circumferential reshaping area being suitable for contacting the corneal surface (0) at a corneal apex distance (D12) between 3,70 to 4.2 mm.

As shown in figure 2, the portions (111a, 111b) of said annular reverse curve (11a) and said annular outgoing curve (11b) adjacent to the reshaping line (11) are defined by a single progressive radius of curvature (R), being its magnitude between 1 mm and 3 mm, and asphericity between 0 and 2. By having a curvature in this range, the contact area defined by said portions (111a, 111b) applies a localised pressure without damaging the epithelium, reshaping it quickly and in an optimal manner. It also can be seen an inclination angle (α) of the annular reverse curve (11a) with respect to the tangent plane (shown in dotted lines) of the corneal surface (0) of about 45°, whereas the inclination angle (β) of the annular outgoing curve (11b) is about 35°.

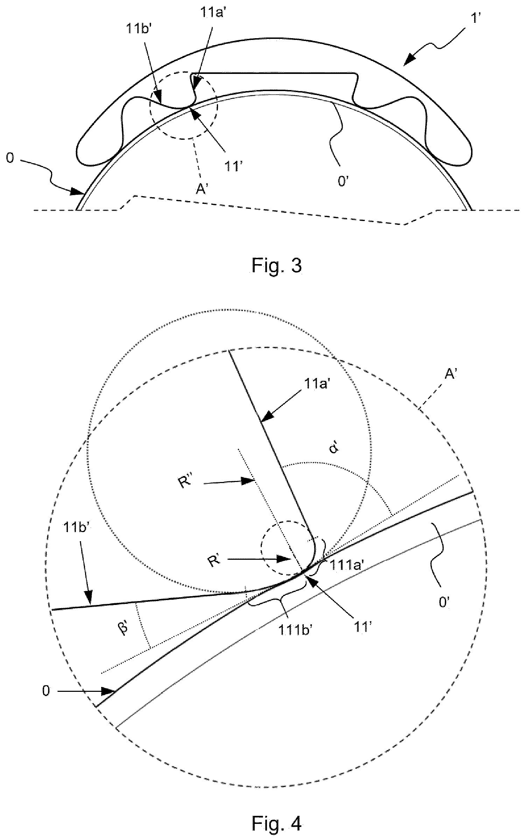

Figures 3 and 4 show an example not covered by the present invention, wherein each portion (111a', 111b') of said annular reverse curve (11a') and said annular outgoing curve (11b') adjacent to the reshaping line (11') comprise a different radius of curvature (R', R"); a first radius (R') of about 0.1 mm, and a second radius (R") of about 0.7 mm. Also in this embodiment, the annular reverse curve (11a') has an inclination angle (α') with respect to the tangent plane of the corneal surface (0) of about 85°, whereas the inclination angle (β') of the annular outgoing curve (11b') is about 35°. An embodiment of the present invention is like the example of Figures 3 and 4, but with the first radius (R') between 1 mm and 3 mm and the second radius (R") also between 1 mm and 3 mm.

## Claims

1. An orthokeratological contact lens (1) having an inner profile intended to be placed, in use, on the corneal surface (0) of an eye and modify the thicknesses of its epithelium (0') to correct refractive defects, said inner profile comprising:
- A disc shaped central curve (10) designed to centrally correct the refractive defect of the eye when, in use, is placed concentrically with respect to its pupil,
- an annular reverse curve (11a) connected annularly to the central curve (10), at least a portion of the annular reverse curve (11a) having a smaller radius than the central curve (10),
the contact lens (1) being **characterised in that** comprises an annular outgoing curve (11b) tangentially connected to the annular reverse curve (11a) at a circumferential connection line (11) configured to, in use, be in contact with the epithelium (0') of the eye at a corneal apex distance (D11) between 3 to 4 mm, so defining a circumferential reshaping area configured to, in use, contact the corneal surface (0) and apply a determined annular pressure on the periphery of the cornea for reshaping the epithelium (0'), the circumferential reshaping area comprising each portion of said annular reverse curve (11a) and said annular outgoing curve (11b) adjacent to the circumferential connection line (11), and **in that** the portions (111a, 111b) of said annular reverse curve (11a) and said annular outgoing curve (11b) adjacent to the reshaping line (11) comprise a radius of curvature (R, R', R") between 1 mm and 3 mm.

2. The orthokeratological contact lens (1) according to claim 1, **characterised in that** each portion (111a', 111b') of said annular reverse curve (11a') and said annular outgoing curve (11b') adjacent to the reshaping line (11') comprise a different radius of curvature (R', R").

3. The orthokeratological contact lens (1) according to claim 1 or 2, **characterised in that** the radius of curvature (R, R', R") of any of the portions (111a, 111b, 111a', 111b') of said annular reverse curve (11a, 11a') and said annular outgoing curve (11b, 11b') adjacent to the reshaping line (11, 11') varies progressively according to a determined sphericity factor defined according to said determined annular pressure on the periphery of the cornea.

4. The orthokeratological contact lens (1) according to any of claims from 1 to 3, **characterised in that** a central portion of said annular reverse curve (11a) has, in use, an inclination angle (α) with respect to the tangent plane of the corneal surface (0) between 5° and 85°.

5. The orthokeratological contact lens (1) according to any of claims from 1 to 4, **characterised in that** a central portion of said annular outgoing curve (11b) has, in use, an inclination angle (β) with respect the tangent plane of the corneal surface (0) between 5° and 60°.

6. The orthokeratological contact lens (1) according to any of claims from 1 to 5, **characterised in that** it comprises:
- at least one further annular reverse curve (12a) connected annularly to the annular outgoing curve (11b) and
- at least one further annular outgoing curve (12b) connected annularly to the at least one further annular reverse curve (12a) at a second circumferential connection line (12),
so defining at least one further circumferential reshaping area comprising each portion of said at least one further annular reverse curve (12a) and said at least one further annular outgoing curve (12b) adjacent to the circumferential connection line (12), the at least one further circumferential reshaping area being configured to, in use, contact the corneal surface (0) and apply a determined annular pressure on the periphery of the cornea for reshaping the epithelium (0').

## Patentansprüche

1. Orthokeratologische Kontaktlinse (1), die ein Innenprofil aufweist, das dafür bestimmt ist, bei Verwendung an der Hornhautoberfläche (0) eines Auges angeordnet zu werden und die Dicke seines Epithels (0') zu ändern, um Brechungsfehler zu korrigieren, wobei das Innenprofil umfasst:
- eine scheibenförmige zentrale Kurve (10), die ausgelegt ist, den Brechungsfehler des Auges zentral zu korrigieren, wenn sie bei Verwendung in Bezug auf seine Pupille konzentrisch angeordnet ist,
- eine ringförmige Umkehrkurve (11a), die mit der zentralen Kurve (10) ringförmig verbunden ist, wobei wenigstens ein Abschnitt der ringförmigen Umkehrkurve (11a) einen kleineren Radius als die zentrale Kurve (10) aufweist,
wobei die Kontaktlinse (1) **dadurch gekennzeichnet ist, dass** sie eine ringförmige ausgehende Kurve (11b) umfasst, die bei einer Umfangsverbindungslinie (11), die konfiguriert ist, bei Verwendung in einer Hornhautscheitelpunktentfernung (D11) zwischen 3 bis 4 mm mit dem Epithel (0') des Auges bei in Kontakt zu sein, mit der ringförmigen Umkehrkurve (11a) tangential verbunden ist, sodass sie einen Umfangsumformungsbereich definiert, der konfiguriert ist, bei Verwendung die Hornhautoberfläche (0) zu berühren und auf den Umfang der Hornhaut einen bestimmten ringförmigen Druck auszuüben, um das Epithel (0') umzuformen, wobei der Umfangsumformungsbereich jeden Abschnitt der ringförmigen Umkehrkurve (11a) und der ringförmigen ausgehenden Kurve (11b), der benachbart zu der Umfangsverbindungslinie (11) ist, umfasst, und dass die Abschnitte (111a, 111b) der ringförmigen Umkehrkurve (11a) und der ringförmigen ausgehenden Kurve (11b)benachbart zu der Umformungslinie (11) einen Krümmungsradius (R, R', R") zwischen 1 mm und 3 mm umfassen.

2. Orthokeratologische Kontaktlinse (1) nach Anspruch 1, **dadurch gekennzeichnet, dass** jeder Abschnitt (111a', 111b') der ringförmigen Umkehrkurve (11a') und der ringförmigen ausgehenden Kurve (11b') benachbart zu der Umformungslinie (11') einen anderen Krümmungsradius (R', R") umfasst.

3. Orthokeratologische Kontaktlinse (1) nach Anspruch 1 oder 2, **dadurch gekennzeichnet, dass** sich der Krümmungsradius (R, R', R") irgendeines der Abschnitte (111a, 111b, 111a', 111b') der ringförmigen Umkehrkurve (11a, 11a') und der ringförmigen ausgehenden Kurve (11b, 11b') benachbart zu der Umformungslinie (11, 11') entsprechend einem vorgegebenen, in Übereinstimmung mit dem bestimmten ringförmigen Druck auf den Umfang der Hornhaut definierten Sphärizitätsfaktor fortschreitend ändert.

4. Orthokeratologische Kontaktlinse (1) nach einem der Ansprüche 1 bis 3, **dadurch gekennzeichnet, dass** ein zentraler Abschnitt der ringförmigen Umkehrkurve (11a) bei Verwendung einen Neigungswinkel (α) in Bezug auf die Tangentialebene der Hornhautoberfläche (0) zwischen 5° und 85° aufweist.

5. Orthokeratologische Kontaktlinse (1) nach einem der Ansprüche 1 bis 4, **dadurch gekennzeichnet, dass** ein zentraler Abschnitt der ringförmigen ausgehenden Kurve (11b) bei Verwendung einen Neigungswinkel (β) in Bezug auf die Tangentialebene der Hornhautoberfläche (0) zwischen 5° und 60° aufweist.

6. Orthokeratologische Kontaktlinse (1) nach einem der Ansprüche 1 bis 5, **dadurch gekennzeichnet, dass** sie umfasst:
- wenigstens eine weitere ringförmige Umkehrkurve (12a), die mit der ringförmigen ausgehenden Kurve (11b) ringförmig verbunden ist, und
- wenigstens eine weitere ringförmige ausgehende Kurve (12b), die mit der wenigstens einen weiteren ringförmigen Umkehrkurve (12a) bei einer zweiten Umfangsverbindungslinie (12) ringförmig verbunden ist,
sodass sie wenigstens einen weiteren Umfangsumformungsbereich, der jeden Abschnitt der wenigstens einen weiteren ringförmigen Umkehrkurve (12a) und der wenigstens einen weiten ringförmigen ausgehenden Kurve (12b) benachbart zu der Umfangsverbindungslinie (12) umfasst, definiert, wobei der wenigstens eine weitere Umfangsumformungsbereich konfiguriert ist, bei Verwendung die Hornhautoberfläche (0) zu berühren und auf den Umfang der Hornhaut einen bestimmten ringförmigen Druck auszuüben, um das Epithel (0') umzuformen.

## Revendications

1. Lentille de contact orthokératologique (1) présentant un profil interne destiné à être placé, en utilisation, sur la surface cornéenne (0) d'un oeil et à modifier les épaisseurs de son épithélium (0') pour corriger des défauts de réfraction, ledit profil interne comprenant :
- une courbe centrale en forme de disque (10) conçue pour corriger centralement le défaut de réfraction de l'œil lorsqu'en utilisation, elle est placée concentriquement par rapport à sa pupille,
- une courbe inverse annulaire (11a) reliée de manière annulaire à la courbe centrale (10), au moins une partie de la courbe inverse annulaire (11a) présentant un rayon plus petit que la courbe centrale (10),
la lentille de contact (1) étant **caractérisée en ce qu'**elle comprend une courbe de sortie annulaire (11b) reliée tangentiellement à la courbe annulaire inverse (11a) au niveau d'une ligne de connexion circonférentielle (11) configurée pour, en utilisation, être en contact avec l'épithélium (0') de l'œil à une distance de sommet de cornée (D11) comprise entre 3 et 4 mm, définissant ainsi une zone de remodelage circonférentielle configurée pour, en utilisation, venir en contact avec la surface cornéenne (0) et appliquer une pression annulaire déterminée sur la périphérie de la cornée pour remodeler l'épithélium (0'), la zone de remodelage circonférentielle comprenant chaque partie de ladite courbe annulaire inverse (11a) et de ladite courbe de sortie annulaire (11b) adjacente à la ligne de connexion circonférentielle (11), et **en ce que** les parties (111a, 111b) de ladite courbe annulaire inverse (11a) et de ladite courbe de sortie annulaire (11b) adjacentes à la ligne de remodelage (11) comprennent un rayon de courbure (R, R', R") compris entre 1 mm et 3 mm.

2. Lentille de contact orthokératologique (1) selon la revendication 1, **caractérisée en ce que** chaque partie (111a', 111b') de ladite courbe annulaire inverse (11a') et de ladite courbe de sortie annulaire (11b') adjacente à la ligne de remodelage (11') comprend un rayon de courbure différent (R', R").

3. Lentille de contact orthokératologique (1) selon la revendication 1 ou 2, **caractérisée en ce que** le rayon de courbure (R, R', R") de l'une quelconque des parties (111a, 111b, 111a', 111b') de ladite courbe annulaire inverse (11a, 11a') et de ladite courbe de sortie annulaire (11b, 11b") adjacente à la ligne de remodelage (11, 11') varie progressivement en fonction d'un facteur de sphéricité déterminé défini en fonction de ladite pression annulaire déterminée sur la périphérie de la cornée.

4. Lentille de contact orthokératologique (1) selon l'une quelconque des revendications 1 à 3, **caractérisée en ce qu'**une partie centrale de ladite courbe inverse annulaire (11a) présente, en utilisation, un angle d'inclinaison (α) par rapport au plan tangent de la surface cornéenne (0) compris entre 5° et 85°.

5. Lentille de contact orthokératologique (1) selon l'une quelconque des revendications 1 à 4, **caractérisée en ce qu'**une partie centrale de ladite courbe de sortie annulaire (11b) présente, en utilisation, un angle d'inclinaison (β) par rapport au plan tangent de la surface cornéenne (0) compris entre 5° et 60°.

6. Lentille de contact orthokératologique (1) selon l'une quelconque des revendications 1 à 5, **caractérisée en ce qu'**elle comprend :
- au moins une courbe annulaire inverse supplémentaire (12a) reliée de manière annulaire à la courbe de sortie annulaire (11b) et
- au moins une courbe de sortie annulaire supplémentaire (12b) reliée de manière annulaire à l'au moins une courbe inverse annulaire supplémentaire (12a) au niveau d'une seconde ligne de connexion circonférentielle (12),
en définissant ainsi au moins une zone de remodelage circonférentielle supplémentaire comprenant chaque partie de ladite au moins une courbe annulaire inverse supplémentaire (12a) et de ladite au moins une courbe de sortie annulaire supplémentaire (12b) adjacente à la ligne de connexion circonférentielle (12), l'au moins une autre zone de remodelage circonférentielle étant configurée pour, en utilisation, venir en contact avec la surface cornéenne (0) et appliquer une pression annulaire déterminée sur la périphérie de la cornée pour remodeler l'épithélium (0').
